# EUROPEAN PATENT APPLICATION

(11) **EP 4 787 342 A1**
(43) Date of publication of application: **05.08.2026**
(21) Application number: 26153959.7
(22) Date of filing: 26.01.2026
(51) Int. Cl.: G06V 30/416, G06V 30/41

(54) **PROFILE SETTING METHOD FOR CHARACTER RECOGNITION**

(30) Priority: 03.02.2025 JP 2025016325
(71) Applicant: Toshiba TEC Kabushiki Kaisha, Tokyo 141-8562 (JP)
(72) Inventor: Sakuma, Sho, Tokyo 141-8562 (JP); Maeda, Tomoki, Tokyo 141-8562 (JP); Takimura, Ryo, Tokyo 141-8562 (JP); Okada, Shuta, Tokyo 141-8562 (JP); Umekawa, Kohei, Tokyo 141-8562 (JP)
(74) Representative: Hoffmann Eitle

(57) **Abstract**

According to one embodiment, an extracted keyword setting method that eliminates complicated work in a profile setting for character recognition is provided. A profile setting method for character recognition of a server includes extracting one or more keywords from a result of character recognition processing on a document and displaying the extracted keywords in a selectable manner on a screen of an information processing device. The server accepts a keyword setting from the information processing device such that a keyword will be extracted from a document in subsequent processing based on the selected keyword(s). For example, a keyword in this context may be such things as section headings, titles, and/or information labels.

## Description

### CROSS-REFERENCE TO RELATED APPLICATION

This application is based upon and claims the benefit of priority from Japanese Patent Application No. 2025-016325, filed February 3, 2025, the entire contents of which are incorporated herein by reference.

### FIELD

Embodiments described herein relate generally to a profile setting method for character recognition.

### BACKGROUND

In the related art, there is an information processing device that enables character recognition of a document having a semi-standard format such as fillable forms or the like. There is also a known type of automated workflow system that utilizes the results of character recognition on documents and the like. In order to utilize the results from character recognition in the workflow system, a keyword may need to be extracted (identified) in the document. Such a keyword to be extracted generally needs to be set and saved in a profile setting for the character recognition processing. However, the method for setting a keyword according to the related art has a problem in that the user must generally carry out complicated work manually for adjusting or setting the profile settings regarding keyword identifications or the like.

Specifically, when selecting a keyword, the user enters the keyword on a dedicated screen (a character recognition profile setting screen) for editing the profile settings for character recognition. The user must generally cause character recognition processing to be performed on an original document as a character recognition test, then check whether the entered keyword is present in the original document based on the result of a keyword search displayed on a screen permitting the checking of the results of the character recognition test. The user must determine whether the entered keyword is appropriate to be used as an extracted keyword. If the result of the character recognition test does not include a keyword that matches the entered keyword, the user needs to carry out work such as visually searching the raw result data of the character recognition text to find a keyword that is appropriate as the extracted keyword, or editing the entered keyword(s) on a character recognition profile setting screen, causing the character recognition processing to be performed again, and then checking whether the newly entered keyword is present based on a keyword search again.

### SUMMARY OF THE INVENTION

One of the objects of the present invention is to improve prior art techniques and overcome at least some of the prior art problems as for instance above illustrated.

According to a first aspect of the invention, it is provided a profile setting method for character recognition processing by a server, the method comprising extracting a preliminary list of keywords from a result of character recognition processing on a test document performed by a server; displaying, on a client terminal connected to the server, the preliminary list of keywords in a selectable manner on a screen of the client terminal; accepting, via the screen of the client terminal, a selection of a keyword from the preliminary list of keywords; and saving, on the server, the selection of the keyword to a document processing profile.

Optionally, in the profile setting method according to the first aspect of the invention, the preliminary list of keywords are those words identified as section headings in the test document.

Optionally, in the profile setting method according to the first aspect of the invention, the preliminary list of keywords are those words identified as region labels in the test document.

Optionally, the profile setting method according to the first aspect of the invention further comprises performing, on the server, the character recognition processing on the test document again using the saved document processing profile.

Optionally, the profile setting method according to the first aspect of the invention further comprises performing, on the server, the character recognition processing on another document using the saved document processing profile.

Optionally, in the profile setting method according to the first aspect of the invention, the preliminary list is displayed as a drop-down list.

Optionally, in the profile setting method according to the first aspect of the invention, initiation of the character recognition processing on the test document performed by the server is performed via the same screen of the client terminal on which the preliminary list of extracted keywords is displayed.

Optionally, in the profile setting method according to the first aspect of the invention, the screen includes a send test document button to initiate the character recognition processing on the test document.

According to a second aspect of the invention, it is provided a profile setting system for character recognition processing by a server, the system comprising a client terminal; and a server connected to the client terminal via a network, the server configured to extract a preliminary list of keywords from a result of character recognition processing on a test document performed by the server; causing the client terminal to display the preliminary list of keywords in a selectable manner on a screen of the client terminal; receiving from the client terminal via the screen of the client terminal, a selection of a keyword from the preliminary list of keywords; and saving the selection of the keyword to a document processing profile.

Optionally, in the profile setting system according to the second aspect of the invention, the preliminary list of keywords are those words identified as section headings in the test document.

Optionally, in the profile setting system according to the second aspect of the invention, the preliminary list of keywords are those words identified as region labels in the test document.

Optionally, in the profile setting system according to the second aspect of the invention, the server is further configured to perform the character recognition processing on the test document again using the saved document processing profile.

Optionally, in the profile setting system according to the second aspect of the invention, the server is further configured to perform the character recognition processing on another document using the saved document processing profile.

Optionally, in the profile setting system according to the second aspect of the invention, the preliminary list is displayed as a drop-down list.

Optionally, in the profile setting system according to the second aspect of the invention, initiation of the character recognition processing on the test document performed by the server is performed via the same screen of the client terminal on which the preliminary list of extracted keywords is displayed.

Optionally, in the profile setting system according to the second aspect of the invention, the screen includes a send test document button to initiate the character recognition processing on the test document.

According to a third aspect of the invention, it is provided a profile setting server for character recognition processing, the server comprising a storage unit; a communication interface connected to a client terminal via a network; and a processor configured to extract a preliminary list of keywords from a result of character recognition processing on a test document; display, on the client terminal, the preliminary list of keywords in a selectable manner on a screen of the client terminal; accept, via the screen of the client terminal, a selection of a keyword from the preliminary list of keywords; and save, in the storage unit, the selection of the keyword to a document processing profile.

Optionally, in the profile setting server according to the third aspect of the invention, the processor is further configured to perform the character recognition processing on the test document again using the saved document processing profile.

Optionally, in the profile setting server according to the third aspect of the invention, the processor is further configured to perform the character recognition processing on another document using the saved document processing profile.

### BRIEF DESCRIPTION OF THE DRAWINGS

FIG. 1 is a block diagram of an information processing system implementing a profile setting method for character recognition according to an embodiment.
FIG. 2 is a block diagram showing an example of a functional configuration of a server.
FIG. 3 depicts an example of a document to be processed in a character recognition processing.
FIG. 4 shows an example of a result of the character recognition processing on the document of FIG. 3.
FIG. 5 shows an example of a character recognition profile setting screen.
FIG. 6 is a flowchart for a setting of an extracted keyword via a character recognition profile setting.

### DETAILED DESCRIPTION

An embodiment described herein is to provide an extracted keyword setting method that eliminates complicated work for users in establishing a profile setting for character recognition processes.

In general, according to one embodiment, a profile setting method for character recognition processing by a server includes extracting a preliminary list of keywords from a result of character recognition processing on a test document performed by a server; displaying, on a client terminal connected to the server, the preliminary list of keywords in a selectable manner on a screen of the client terminal; accepting, via the screen of the client terminal, a selection of a keyword from the preliminary list of keywords; and saving, on the server, the selection of the keyword to a document processing profile.

An exemplary profile setting method for character recognition according to an embodiment will now be described with reference the drawings. In this example, a semi-standard document OCR (optical character recognition) process by which documents with different layouts from each other can be read using definition data that defines sets of conditions for extracting information from an individual document is used for the character recognition processing.

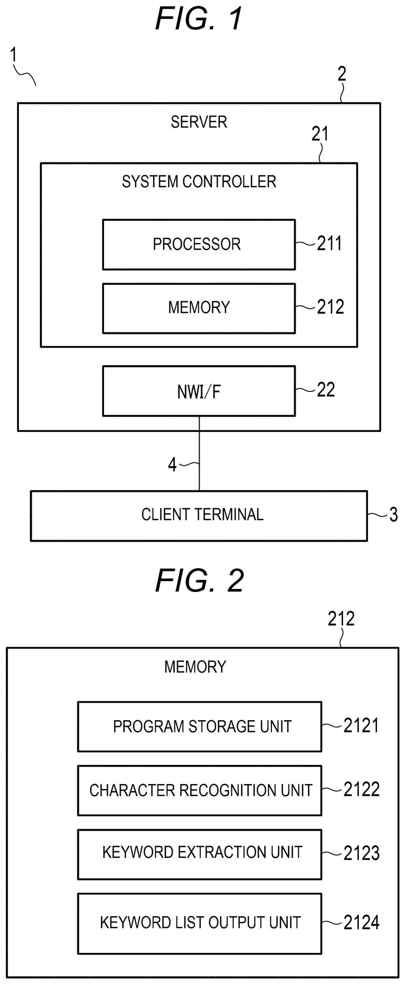

FIG. 1 is a block diagram showing an example of the configuration of an information processing system 1 for implementing the profile setting method for character recognition processing according to an embodiment.

The information processing system 1 includes a server 2 and a client terminal 3. The server 2 and the client terminal 3 are connected to each other via a network 4.

The server 2 provides data and services to the client terminal 3 via the network 4. The server 2 may have the functions of a web server, an application server, and/or a database server. The functions of the server 2 may be distributed across a plurality of servers.

The server 2 includes a system controller 21, a network interface 22, and the like. The system controller 21 and the network interface 22 are connected to each other via a bus. In FIG. 1, network interface is abbreviated as "NW I/F".

The system controller 21 controls the overall operations of the server 2. The system controller 21 includes, for example, a processor 211 and a memory 212.

The processor 211 is an arithmetic element (for example, a CPU) that executes arithmetic processing. In general, the processor 211 executes software or the like to perform the various functions and operations of the system controller 21. That is, the processor 211 performs various processing based a program or the like stored in the memory 212. The processor 211 executes the program stored in the memory 212 and is thus configured thereby to function as a control unit or the like that can execute various operations as described.

The memory 212 is a memory device that stores a program and data used for the program, or the like. The memory 212 temporarily stores data that is being currently processed by the processor 211, or the like. The memory 212 is configured as a non-volatile memory and a volatile memory. The memory 212 stores definition data for character recognition.

The network interface 22 is for communicating with the client terminal 3 via the network 4.

In general, the client terminal 3 transmits a request for data and/or services to the server 2 and then receives a response therefrom. The client terminal 3 transmits a document to the server 2 in accordance with an operation performed by the user or the like at the client terminal. The client terminal 3 is, for example, a PC (personal computer), a smartphone, a tablet, or the like.

FIG. 2 is a schematic block diagram showing an example of a functional configuration of the server 2 according to an embodiment. The server 2 includes a program storage unit 2121, a character recognition unit 2122, a keyword extraction unit 2123, and a keyword list output unit 2124.

The program storage unit 2121 stores a program with algorithmic instructions or the like for causing the processor 211 to perform an operation such as a profile setting for character recognition processing.

The character recognition unit 2122 acquires a document from the client terminal 3 and executes character recognition processing on the document.

The keyword extraction unit 2123 extracts a keyword registered in the definition data used for the character recognition from the character recognition results provided by the character recognition unit 2122.

The keyword list output unit 2124 generates a list of keywords extracted by the keyword extraction unit 2123.

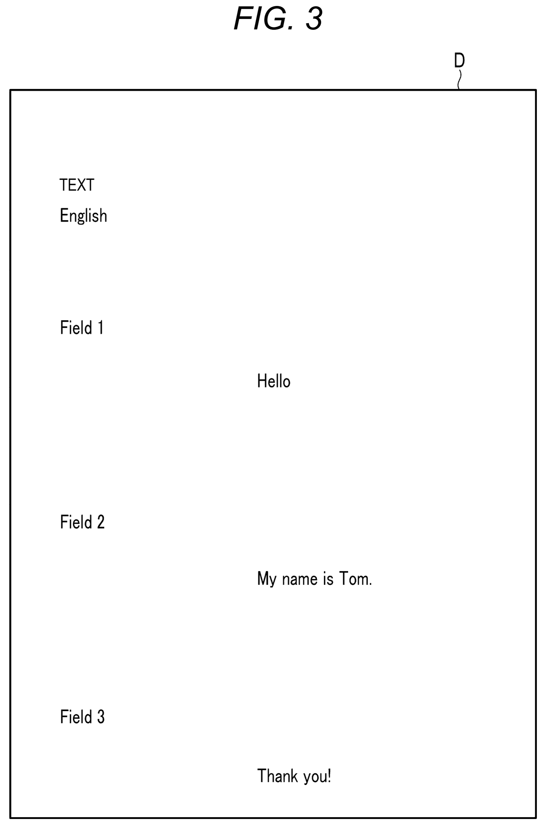

FIG. 3 depicts an example of a document D that is to be processed in the character recognition according to an embodiment. The document D is a document including at least one keyword and a value corresponding to the keyword.

The document D shown in FIG. 3 includes "Field 1", "Field 2", and "Field 3", as keywords. In this context, keywords may be considered to be section labels, section headings, document region titles, or the like that are present in the document in a way that suggests information structuring, document organization, content positioning, or the like. In the depicted example, a value of "Hello" is associated with the first keyword "Field 1". A value of "My name is Tom" is associated with the second keyword "Field 2". A value of "Thank you!" is associated with the last (third) keyword "Field 3".

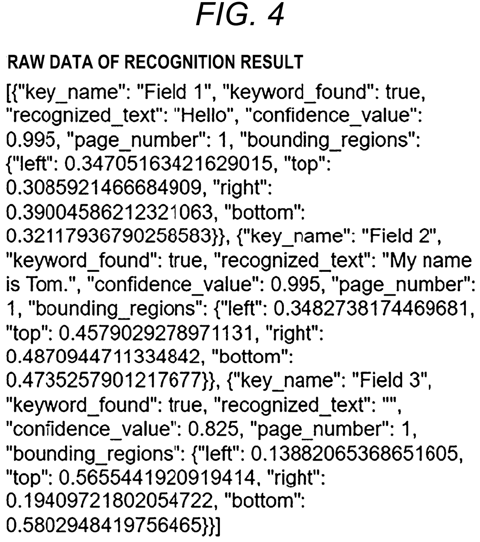

FIG. 4 shows an example of the result (raw data) from the character recognition processing performed on the document D depicted in FIG. 3 by the character recognition unit 2122. As depicted in FIG. 4 the identifies and extracts "Field 1", "Field 2", and "Field 3" as registered keywords as set in the definition data. The character recognition unit 2122 also identifies and extracts "Hello", "My name is Tom", and "Thank you!" as values corresponding to the respective first to third keywords. The character recognition unit 2122 also extracts the position coordinates in the document D for the content values identified as corresponding to the respective keywords.

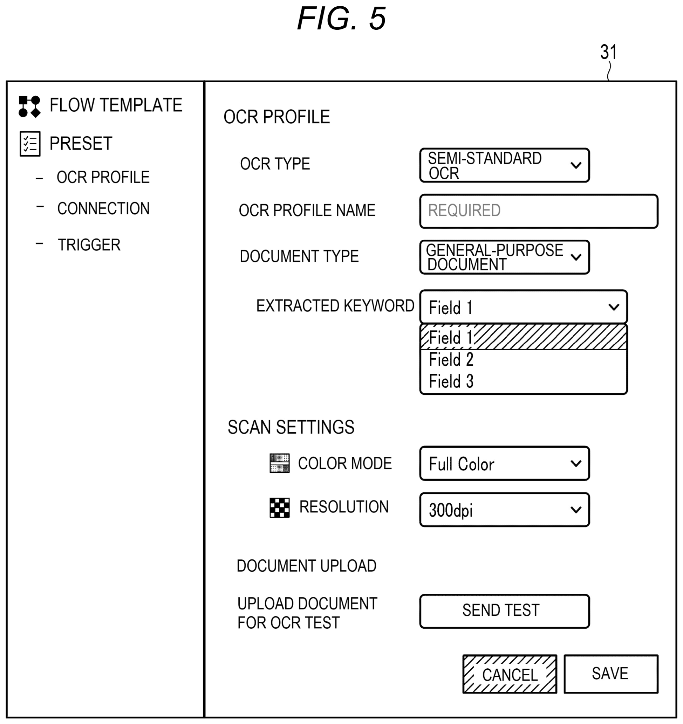

FIG. 5 shows an example of a character recognition profile setting screen 31 according to an embodiment. The character recognition profile setting screen 31 can be a web page provided by a web site that accepts registration and editing settings of a workflow template for an automated workflow system. The character recognition profile setting screen 31 can be displayed on the client terminal 3 based on a response from the server 2 to a request from the client terminal 3. In the present context, a flow template defines a series of steps or processes in an automated workflow. For the present flow template, the client terminal 3 can set a profile (group of settings) to be used for the character recognition processing from the depicted character recognition profile setting screen 31 and then save the profile settings to the server 2. The user's profile settings can be saved as a "preset" group of settings for the flow template or flow templates for executing workflows. When establishing a flow template, the client terminal 3 can access a saved preset and apply the previously saved preset directly to the flow template or edit the individual profile settings to be used with the flow template.

On the character recognition profile setting screen 31 of this example, there are regions labeled "OCR profile", "scan setting", and "document upload" and displayed as main fields. Also, "OCR type", "OCR profile name", "document type", "extracted keyword", "color mode", and "resolution" are displayed as sub fields within respective main fields.

For the sub field OCR type, a general type of character recognition to be used is selectable. The character recognition options are, for example, standard OCR, semi-standard OCR, or non-standard OCR.

In the sub field OCR profile name, a name for the profile setting can be entered. The customized character recognition profile settings are saved in the memory 212 in association with the name entered in the field for the OCR profile name to permit retrieval, reuse, or the like.

In the sub field document type, a general type of document to be processed is selectable. The document options are, for example, a ledger sheet document, a general-purpose document, or the like.

In the sub field extracted keyword, a keyword to be used for the character recognition processing can be set. For the extracted keyword field, a list of keywords generated by the keyword list output unit 2124 can be displayed. The list is displayed, for example, in a dropdown format. One or more keywords can be selected from the list via the client terminal. When the character recognition is performed using the profile setting, only the selected keywords will be identified and extracted as keywords by the character recognition unit 2122. Words identified as possible keywords but not specifically set as keywords in the profile setting will not be treated as keywords for the character recognition processing.

Also, because the keyword candidate list is displayed on the character recognition profile setting screen 31, the user need not check the raw data result of the character recognition for possible keywords and there is no need to review the raw data or the like on a screen other than the character recognition profile setting screen 31 as would be necessary in the related art. That is, the user of the present embodiment can simply review one window to select a keyword from among the already listed extracted keywords, and therefore the user's work is simplified. Also, since the list is displayed in a dropdown format, there is an advantage in that the field where the keyword settings are changed can be intuitively recognized, as compared with a case where the list is displayed on a different screen from the character recognition profile setting screen 31 or in another window.

In the main field scan settings, settings for reading of a physical original document using a scanner and then converting the read document into an image file are selectable. An image file generated from the original document may be used as a test document for a character recognition processing test. In the sub field color mode, color mode options for the converted document image file can be selected. The color mode options are, for example, full-color, binary, gray scale, or the like.

In the main field document upload, designation that a document D is to be uploaded and used as a sample or test document in a character recognition test using the character recognition profile setting can be set. The document D may be transmitted as an image file to the server 2 from the local storage or camera of the client terminal 3.

Upon accepting the execution of a character recognition test, the server 2 causes the character recognition profile setting screen 31 to display a list of extracted keywords without shifting the screen shown on the client terminal 3 from the character recognition profile setting screen 31. That is, the processing of the sample document D can be used to populate the extracted keyword list.

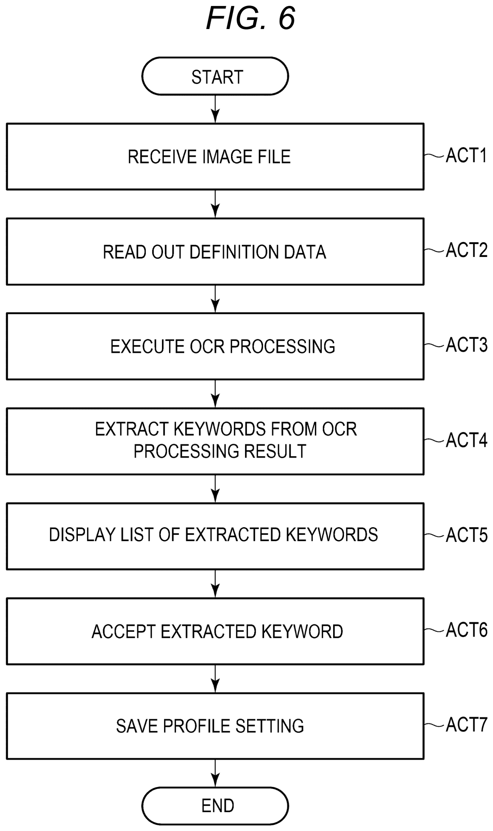

FIG. 6 is a flowchart of the processing by the server 2 in a character recognition profile setting according to an embodiment. A process flow for setting of the extracted keywords in the character recognition profile setting according to an embodiment will be described with reference to FIG. 6.

First, the client terminal 3 accesses a web page for accepting the registration and editing settings of a job template (workflow template) for the workflow system. The client terminal 3 selects and sets an OCR type and a document type on the character recognition profile setting screen 31. In the present example, "semi-standard OCR" is selected as the OCR type, and "general-purpose document" is selected as the document type. The client terminal 3 eventually transmits the document D and a command to execute a character recognition test on the document D.

The server 2 receives the document D from the client terminal 3 via the network 4 (ACT1). Upon receiving the command to execute the character recognition test from the client terminal 3, the character recognition unit 2122 reads out the currently set definition data for the character recognition processing (ACT2). The character recognition unit 2122 performs the character recognition processing on the received document D using this definition data (ACT3). After character recognition result is generated by the character recognition processing, the keyword extraction unit 2123 extracts keywords from the character recognition result (ACT4). The keyword list output unit 2124 generates a list of the keywords extracted by the keyword extraction unit 2123 and then causes the character recognition profile setting screen 31 to display the list such that each keyword is selectable (ACT5). The server 2 next accepts a user's selection of an extracted keyword (ACT6). Via the client terminal 3, the user selects one or more keywords from the list and then transmits the selection(s) to the server 2 with a signal indicating that the character recognition profile setting is to be saved. The server 2 saves the character recognition profile setting in the memory 212 (ACT7). The saved character recognition profile setting has the user selected keyword(s) designated as to be extracted from any subsequent document processed according to the profile.

The client terminal 3 may request the server 2 to link the saved character recognition profile setting to a workflow template (job template), and the server 2 will execute this linkage when requested. Thus, when the client terminal 3 using the workflow system causes the server 2 to execute the workflow template linked to the saved profile setting, the server 2 extracts a keyword based on the extracted keyword already set in the profile setting from among the possible keywords included in the document.

As described above, since a list of keywords included in a document is displayed in a profile setting screen for character recognition processing, a keyword is easily selectable by the user, and complicated work such as executing character recognition processing multiple times or searching the result of character recognition for an appropriate keyword, as in the related art, can be eliminated.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure as appended by the pending claims. The accompanying claims and their equivalents are intended to cover such forms or modifications as would fall within the scope of the disclosure.

## Claims

1. A profile setting method for character recognition processing by a server, the method comprising:
extracting a preliminary list of keywords from a result of character recognition processing on a test document performed by a server;
displaying, on a client terminal connected to the server, the preliminary list of keywords in a selectable manner on a screen of the client terminal;
accepting, via the screen of the client terminal, a selection of a keyword from the preliminary list of keywords; and
saving, on the server, the selection of the keyword to a document processing profile.

2. The profile setting method according to claim 1, wherein the preliminary list of keywords are those words identified as section headings in the test document.

3. The profile setting method according to claim 1 or 2, wherein the preliminary list of keywords are those words identified as region labels in the test document.

4. The profile setting method according to any of claims 1 to 3, further comprising
performing, on the server, the character recognition processing on the test document again using the saved document processing profile.

5. The profile setting method according to any of claims 1 to 4, further comprising
performing, on the server, the character recognition processing on another document using the saved document processing profile.

6. The profile setting method according to any of claims 1 to 5, wherein the preliminary list is displayed as a drop-down list.

7. The profile setting method according to any of claims 1 to 6, wherein initiation of the character recognition processing on the test document performed by the server is performed via the same screen of the client terminal on which the preliminary list of extracted keywords is displayed.

8. The profile setting method according to claim 7, wherein the screen includes a send test document button to initiate the character recognition processing on the test document.

9. A profile setting system for character recognition processing by a server, the system comprising:
a client terminal; and
a server connected to the client terminal via a network, the server configured to:
extract a preliminary list of keywords from a result of character recognition processing on a test document performed by the server;
causing the client terminal to display the preliminary list of keywords in a selectable manner on a screen of the client terminal;
receiving from the client terminal via the screen of the client terminal, a selection of a keyword from the preliminary list of keywords; and
saving the selection of the keyword to a document processing profile.

10. The profile setting system according to claim 9, wherein the preliminary list of keywords are those words identified as section headings in the test document.

11. The profile setting system according to claim 9 or 10, wherein the preliminary list of keywords are those words identified as region labels in the test document.

12. The profile setting system according to any of claims 9 to 11, wherein the server is further configured to:
perform the character recognition processing on the test document again using the saved document processing profile, and/or
perform the character recognition processing on another document using the saved document processing profile.

13. The profile setting system according to any of claims 9 to 12, wherein the preliminary list is displayed as a drop-down list.

14. The profile setting system according to any of claims 9 to 13, wherein initiation of the character recognition processing on the test document performed by the server is performed via the same screen of the client terminal on which the preliminary list of extracted keywords is displayed, wherein preferably the screen includes a send test document button to initiate the character recognition processing on the test document.

15. A profile setting server for character recognition processing, the server comprising:
a storage unit;
a communication interface connected to a client terminal via a network; and
a processor configured to:
extract a preliminary list of keywords from a result of character recognition processing on a test document;
display, on the client terminal, the preliminary list of keywords in a selectable manner on a screen of the client terminal;
accept, via the screen of the client terminal, a selection of a keyword from the preliminary list of keywords; and
save, in the storage unit, the selection of the keyword to a document processing profile.
